Europäisches Patentamt

European Patent Office

Office européen des brevets

(11) Publication number: 0 333 977
A2

# (12) EUROPEAN PATENT APPLICATION

(21) Application number: 89100478.0

(22) Date of filing: 12.01.89

(51) Int. Cl.⁴: G03B 42/02

(30) Priority: 19.03.88 JP 66746/88

(43) Date of publication of application:
27.09.89 Bulletin 89/39

(84) Designated Contracting States:
DE FR NL

(71) Applicant: Fuji Photo Film Co., Ltd.
210 Nakanuma Minamiashigara-shi
Kanagawa-ken(JP)

(72) Inventor: Horikawa, Kazuo c/o Fuji Photo
Film Co. Ltd. 798 Miyanodai Kaisei-machi
Ashigarakami-gun Kanagawa-ken(JP)

(74) Representative: Klunker . Schmitt-Nilson .
Hirsch
Winzererstrasse 106
D-8000 München 40(DE)

(54) Radiation image recording and read-out apparatus.

(57) A radiation image recording and read-out apparatus comprises an endless recording belt provided with a stimulable phosphor layer; a group of rollers around which the recording belt is applied, including two roller sections spaced apart from each other by a predetermined distance with the recording belt being held between the two roller sections and circulated along said predetermined distance; an image recording section; an image read-out section; and an erasing section. The predetermined distance between the roller sections is 1-1.5 times as long as the length of the maximum-sized image which is recorded. The image recording section faces the recording belt moving between the roller sections and has a radiation blocking shutter which can be moved between a closed position which covers part of the recording belt on the radiation exposure side, and an open position, in whcih the shutter is retracted from above the recording belt in the image recording section.

F I G .1

# RADIATION IMAGE RECORDING AND READ-OUT APPARATUS

## BACKGROUND OF THE INVENTION

### Field of the Invention

This invention relates to a radiation image recording and read-out apparatus for recording a radiation image on a stimulable phosphor, exposing the stimulable phosphor to stimulating rays which cause the stimulable phosphor to emit light in proportion to the stored radiation energy, detecting the emitted light to read out the radiation image, and converting the emitted light into electric signals. This invention particularly relates to a radiation image recording and read-out apparatus wherein a stimulable phosphor layer is provided on an endless belt.

### Description of the Prior Art

When certain kinds of phosphors are exposed to radiation such as X-rays, $\alpha$-rays, $\beta$-rays, $\gamma$-rays, cathode rays or ultraviolet rays, they store part of the energy of the radiation. Then, when the phosphor which has been exposed to the radiation is exposed to stimulating rays such as visible light, light is emitted by the phosphor in proportion to the stored energy of the radiation. A phosphor exhibiting such properties is referred to as a stimulable phosphor.

As disclosed in U.S. Patent No. 4,258,264 and Japanese Unexamined Patent Publication No. 56-(1981)-11395, it has been proposed to use a stimulable phosphor in a radiation image recording and reproducing system. Specifically, a recording material provided with a layer of the stimulable phosphor is first exposed to radiation which has passed through an object such as the human body in order to store a radiation image of the object thereon, and is then two-dimensionally scanned by stimulating rays such as a laser beam which cause the recording material to emit light in proportion to the stored radiation energy. The light emitted by the recording material upon stimulation thereof is photoelectrically detected and converted into an electric image signal by a photodetector, and by using the image signal, the radiation image of the object can be reproduced as a visible image on a recording medium such as photographic film, a display device such as a cathode ray tube (CRT), or the like.

The radiation image recording and reproducing system which uses a recording material provided with a stimulable phosphor is advantageous over conventional radiography which uses a silver halide photographic material in that the stimulable phosphor recording material can accurately record images even when exposed to a very wide range (latitude) of radiation energy intensities. More specifically, since the amount of light emitted by the stimulable phosphor upon stimulation can vary over a wide range and is proportional to the amount of said stored radiation energy, by reading out the emitted light, amplifying it appropriately, and converting it into an electric image signal, it is possible to obtain a visible image having a desirable density regardless of the absolute values of the radiation energy intensities to which the stimulable phosphor recording material was exposed.

In the aforesaid radiation image recording and reproducing system, the recording material provided with the stimulable phosphor is used to temporarily store the radiation image before reproducing the final visible image therefrom. For the sake of economy, therefore, it is desirable that the recording material provided with the stimulable phosphor be reusable.

Accordingly, the applicant has proposed, for example in EP-0077678, a radiation image recording and read-out apparatus which enables the stimulable phosphor to be efficiently circulated and reused.

The proposed radiation image recording and read-out apparatus comprises, in a single apparatus:

(a) a supporting material,

(b) at least one recording material affixed to said supporting material and comprised of a stimulable phosphor layer capable of storing a radiation image,

(c) an image recording section for exposing said recording material to radiation which has passed through an object in order to store a radiation image of the object on said recording material,

(d) an image read-out section provided with a stimulating ray source for emitting stimulating rays for scanning said recording material carrying said radiation image stored thereon, and a photoelectric read-out means for obtaining an electric image signal by reading out light emitted by said recording material when it is scanned with the stimulating rays,

(e) a means for circulating said recording material affixed to said supporting material with respect to said image read-out section for enabling reuse of said recording material by repeatedly moving said supporting material and said image read-out section with respect to each other, and

(f) an erasing section for eliminating radiation energy remaining on said recording material prior to recording of a next image on said recording material after the radiation image is read out therefrom at said image read-out section, whereby the recording material is efficiently circulated and reused.

In the proposed radiation image recording and read-out apparatus, it is very advantageous for a material comprising an endless supporting belt with a plurality of stimulable phosphor layers overlaid on the endless supporting belt to be used as the recording material. If this is the case, the recording material can be applied around rollers or the like and conveyed and circulated sequentially through the image recording section, the image read-out section and the erasing section.

Also, the applicant has proposed, for example in European Patent Application No. 88100404.8, a radiation image recording and read-out apparatus utilizing a recordingbelt composed of an endless supporting belt with a stimulable phosphor layer provided thereon, which is small and wherein accurate scanning by stimulating rays can be carried out at an image read-out section. With the proposed radiation image recording and read-out apparatus wherein the endless recording belt is applied between two sets of roller sections spaced apart from each other by a distance nearly equal to the length of a single radiation image and an image recording section faces the recording belt moving between the two sets of roller sections, the length of the apparatus in one direction can be decreased to approximately the length of a single radiation image. Also, with this proposed radiation image recording and read-out apparatus, scanning by the stimulating rays is carried out on the circumferential surface of a roller where the most stable movement of the recording belt occurs, and thus the recording material can be accurately and reliably scanned.

In cases where images of a plurality of sizes are to be recorded by the radiation image recording and read out apparatus just described above, the distance between the two sets of roller sections should approximate the length of the largest single image. Therefore, when an image of a comparatively small size is recorded by the apparatus, the image is recorded on only a part of the recording belt portion present between the two sets of roller sections. However, the radiation source irradiates radiation onto the whole portion of the recording belt located between the two sets of roller sections regardless of the size of the image which is to be recorded. Therefore, erasing effected after read-out of the recorded image is finished must be carried out over an area as large as the maximum image size even if an image of a smaller size was recorded. Therefore, erasing cannot be achieved efficiently.

An image of a small size may be recorded by using an irradiation field stop on the radiation source side, which changes the area of irradiation in accordance with the size of the image to be recorded. Thus the area over which the recording material is exposed to radiation at the time of image recording is made smaller. However, radiation scattered from an object may impinge upon an area outside of the image recording area on the recording belt, so that it is still necessary for erasing to be carried out over a region surrounding and including the predetermined image recording area. Therefore, erasing cannot be achieved efficiently.

## SUMMARY OF THE INVENTION

The primary object of the present invention is to provide a radiation image recording and read-out apparatus which can be kept small in size by utilizing an endless recording belt provided with a stimulable phosphor layer and which enables erasing to be carried out efficiently in accordance with the size of the image that was recorded.

Another object of the present invention is to provide a radiation image recording and read-out apparatus which is small in size and wherein the scanning done when reading-out an image is carried out accurately.

The present invention provides a radiation image recording and read-out apparatus comprising:

i) a recording belt composed of an endless belt provided with a stimulable phosphor layer,

ii) a group of rollers, around which rollers said recording belt is applied, including two roller sections spaced apart from each other by a predetermined distance, for conveying and circulating said recording belt along said predetermined distance between said two roller section,

iii) an image recording section for exposing said stimulable phosphor layer to radiation which has passed through an object in order to store a radiation image of the object on said stimulable phosphor layer,

iv) an image read-out section provided with a stimulating ray source for emitting stimulating rays for scanning said stimulable phosphor layer carrying said radiation image store thereon, and a photoelectric read-out means for obtaining an electric image signal by reading out light which is emitted by said stimulable phosphor layer in proportion to the stored radiation energy when said stimulable phosphor layer is scanned and stimulated with the stimulating rays, and

v) an erasing section for eliminating radiation energy remaining on said stimulable phosphor layer prior to recording an image on said stimulable phosphor layer after the previous radiation image is read out therefrom at said image read-out section, wherein the improvement comprises:

a) said predetermined distance between said two roller sections is 1-1.5 times as long as the length of the maximum- sized radiation image which is recorded in said image recording section,

b) said image recording section faces said recording belt moving between said two roller sections, and one end of said image recording section is provided with a radiation blocking shutter which can be moved between a closed position, at which said radiation blocking shutter covers part of said recording belt on the radiation exposure side, and an open position at which said radiation blocking shutter is retracted from above said recording belt in said image recording section, and

c) said image read-out section is positioned such that scanning by said stimulating rays is carried out on a portion of said stimulable phosphor layer present on a circumferential surface of a roller in said group of rollers.

The radiation blocking shutter may also reduce the area of the recording belt exposed to radiation by closing in a direction normal to the direction of conveyance and circulation of the recording belt in the image recording section, thus covering an edge of the recording belt. However, as an erasing light source in the erasing section generally extends over a length at least equal to the width of the recording belt, it is only necessary for efficient erasing that the radiation blocking shutter cover the recording belt at its extremity in the direction of the conveyance and circulation in the image recording section. The size and the position of the portion of the recording belt which is covered by the radiation blocking shutter may be determined arbitrarily. Each of the roller sections is composed of a single roller or a plurality of rollers. The term "predetermined distance between roller sections" as used herein means the length between the most distant edges of the roller sections.

With the radiation image recording and read-out apparatus in accordance with the present invention wherein the stimulable phosphor layer is formed on the recording belt, the predetermined distance between the two roller sections for conveying and circulating the recording belt is adjusted to 1-1.5 times as long as the length of the maximum-sized image, the width of the overall apparatus can be decreased to a minimum of approximately the length of the maximum-sized image, while the recording belt can be disposed at the image recording position without substantially increasing the size of the apparatus. The apparatus as a whole can be made small by decreasing the length of the apparatus in one direction to a value smaller than the length of conventional apparatuses. Also, with the radiation image recording and read-out apparatus in accordance with the present invention wherein scanning by stimulating rays is carried out on the circumferential surface of the roller, where the recording belt moves most stably, the scanning for image read-out can be carried out accurately and reliably.

Moreover, with the radiation image recording and read-out apparatus wherein the image recording section is provided with a radiation blocking shutter, when a small image is to be recorded, a portion outside of the predetermined radiation exposure region on the recording belt can be covered by the radiation blocking shutter so that radiation produced by a radiation source and radiation scattered by an object do not impinge upon said portion outside of the predetermined radiation exposure region on the recording belt. Accordingly, erasing may be carried out only on the predetermined exposure region in accordance with the size of the image recorded at the erasing section, and can be achieved efficiently.

## BRIEF DESCRIPTION OF THE DRAWINGS

Figure 1 is a side view showing an embodiment of the radiation image recording and read-out apparatus in accordance with the present invention,

Figure 2 is a plan view showing the major part of the embodiment shown in Figure 1,

Figures 3A, 3B, 3C, 4A and 4B are plan views showing an image recording table,

Figure 5 is a plan view showing an optical system of the image read-out section in the embodiment shown in Figure 1,

Figure 6 is a side view showing another embodiment of the radiation image recording and read-out apparatus in accordance with the present invention,

Figures 7A through 7G and Figures 8A through 8H are explanatory schematic views showing the relationship between the movement of idle rollers and the operation of elements of the apparatus, and

Figure 9 is a schematic view showing an image recording section utilizing a radiation source provided with an irradiation field stop.

## DESCRIPTION OF THE PREFERRED EMBODIMENTS

The present invention will hereinbelow be described in further detail with reference to the accompanying drawings.

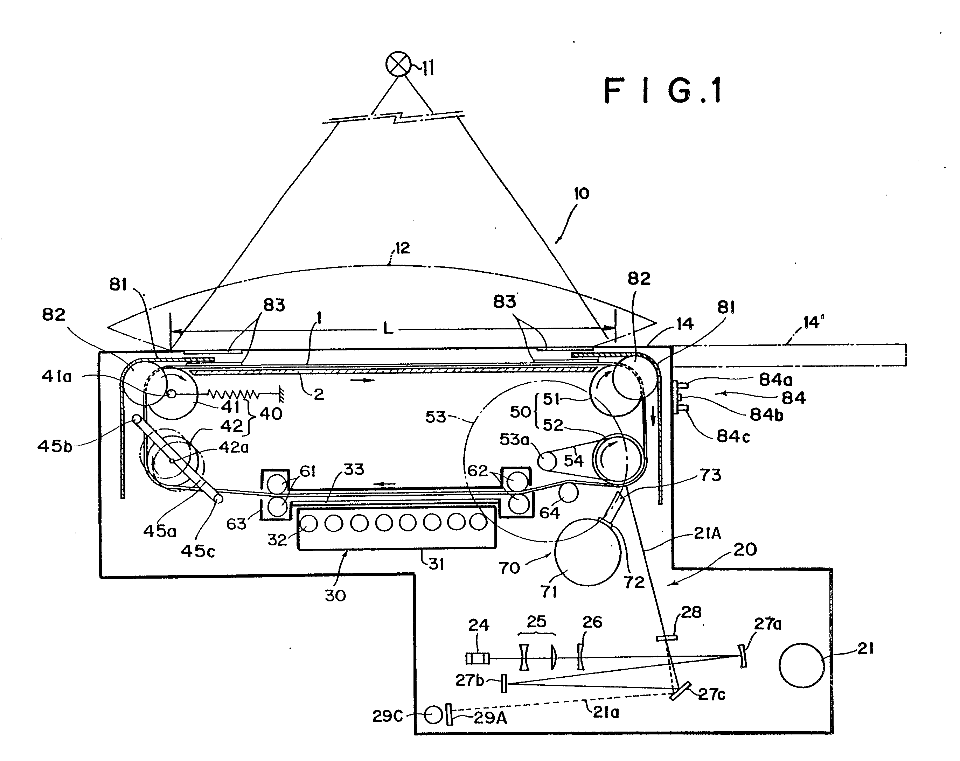

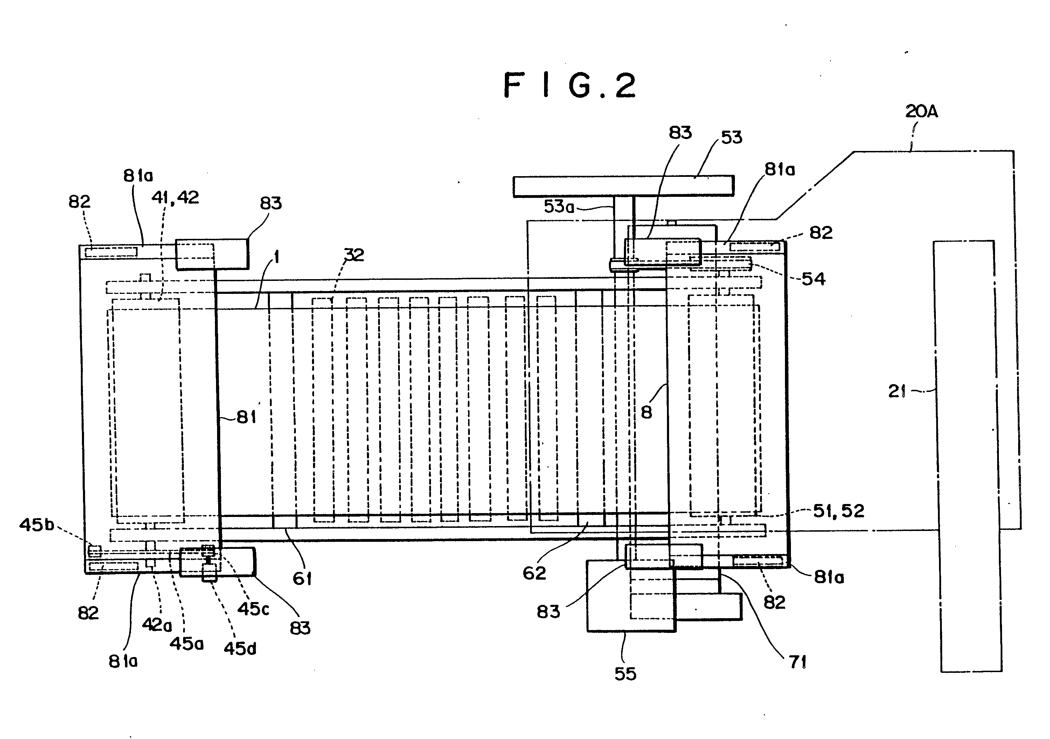

With reference to Figure 1 and 2, a recording belt 1 composed of an endless belt on which a stimulable phosphor layer is formed over the overall surface is applied around a first roller section 40 constituted of rollers 41 and 42, and a second roller section 50 constituted of rollers 51 and 52. The shafts of the first roller section 40 are spaced by a distance L from the shafts of the second roller section 50. The recording belt 1 is conveyed and circulated in the direction indicated by the arrow around the first roller section 40 and the second roller section 50. In this embodiment, the group of rollers are composed of the first and second roller sections 40 and 50, nip rollers 61 and 62, and a roller 64.

A radiation source 11 constituted of an X-ray source or the like is disposed above and facing the recording belt 1. An upper region of the apparatus including the radiation source 11 and an image recording table 14 on which an object 12 is to be placed constitutes an image recording section 10.

In the image recording section 10, the radiation source 11 is activated to produce radiation which passes through the object 12 placed on the image recording table 14, and a radiation image of the object 12 is projected onto the recording belt 1. In this manner, a radiation image of the object 12 is stored on the stimulable phosphor layer of the recording belt 1. In this embodiment, the image recording section 10 can record large-, medium-, and small-sized images as will be described later. The shaft-to-shaft distance L between the first roller section 40 and the second roller section 50 is adjusted to be approximately equal to the length of a single one of the largest-sized images.

The radiation source 11 irradiates radiation onto the overall portion of the recording belt 1 present between the first roller section 40 and the second roller section 50, regardless of the size of the image which is to be recorded at the image recording section 10. In this embodiment, in order to prevent radiation from being irradiated onto unnecessary portions of the recording belt 1 when a medium- or small-sized image is to be recorded, radiation blocking shutters 81, 81 are provided between the image recording table 14 and the recording belt 1.

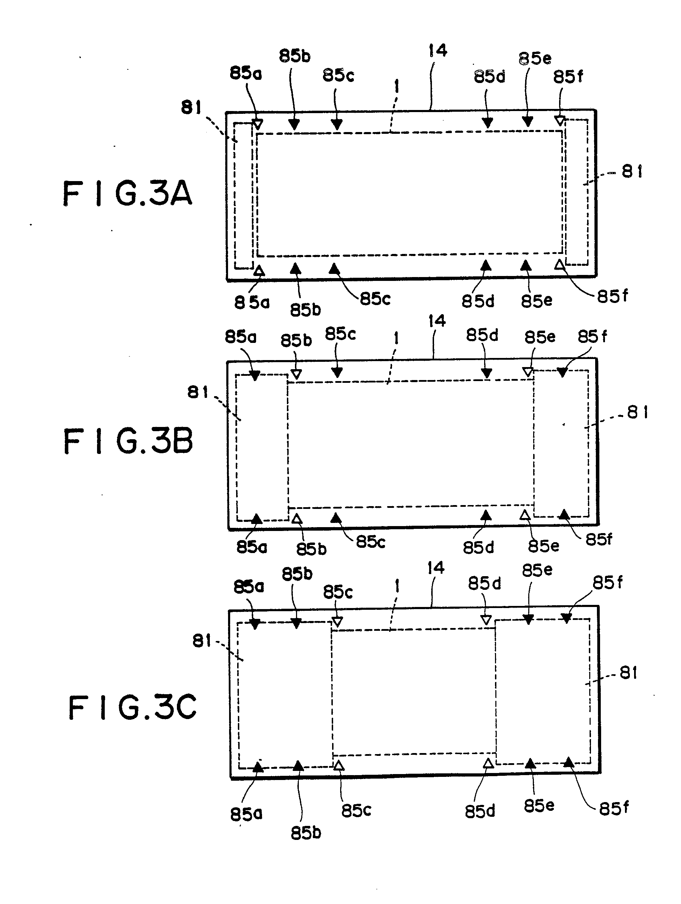

The radiation blocking shutters (hereinafter simply referred to as shutters) 81, 81 are provided at both extremities of the image recording section 10 as viewed in the direction of conveyance of the recording belt 1. The shutters 81, 81 are flexible and imparted with radiation blocking properties by being covered with lead foil or the like. As shown in Figure 2, chains 81a, 81a are provided at side edges of each shutter 81, and are engaged with sprocket wheels 82, 82. As the sprocket wheels 82, 82 are rotated, the shutters 81, 81 are moved along guide plates 83, 83 between closed positions, at which the shutters 81, 81 cover a portion of the recording belt 1 at an extremity in the image recording section 10, and open positions at which the shutters 81, 81 are retracted from their positions above the recording belt 1 so that the overall portion of the recording belt 1 in the image recording section 10 is laid bare. Specifically, the shutters 81, 81 are moved to their open position when a large-sized image is to be recorded, and are moved to their closed positions when a medium- or small-sized image is to be recorded. The shutters 81, 81 have two different closed positions, one for the recording of a medium-sized image and one for the recording of a small-sized image. Also, as shown in Figure 1, a selection means 84 for selecting the size of the image which is to be recorded is provided on a front surface of the apparatus. A pushbutton 84a of the selection means 84 selects large-sized image recording, a pushbutton 84b selects medium-sized image recording, and a pushbutton 84c selects small-sized image recording. The sprocket wheels engaged with the shutters 81, 81 are rotated a predetermined number of turns in accordance with the selection of the pushbutton 84a, 84b or 84c. Figures 3A, 3B and 3C respectively show positions of the shutters 81, 81 for large-sized image recording, medium-sized image recording, and small-sized image recording. The positions of the shutters 81, 81 cannot be viewed directly from outside the apparatus. Therefore, as shown in Figures 3A, 3B and 3C, indicators 85a, 85b, 85c, 85d, 85e and 85f, constituted of light emitting elements, are provided on the image recording table 14. When pushbutton 84a is depressed, indicators 85a and 85f are activated to produce light and indicate the area over which an image will be recorded (Figure 3A). When pushbutton 84b is depressed, indicators 85b and 85e are activated to produce light and indicate the area over which an image will be recorded (Figure 3B). When pushbutton 84c is depressed, indicators 85c and 85d are activated to produce light and indicate the area over which an image will be recorded (Figure 3C). By providing the shutters 81, 81 which can be moved in accordance with the size of the image which is to be recorded, radiation can be prevented from impinging upon a region outside of a desired image recording region.

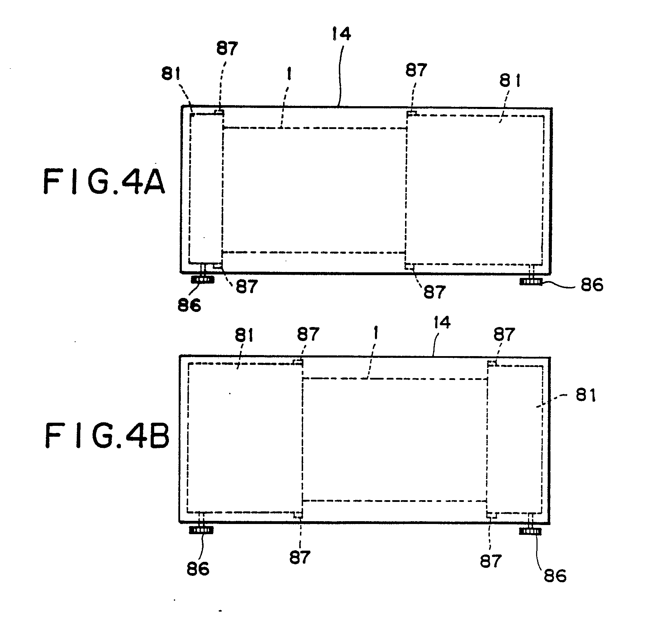

Only a single shutter 81 may be provided on one side of the image recording section 10. In this case, small-sized image recording is carried out at an edge portion of the image recording table 14, instead in the middle portion of the image recording table 14. Also, as shown in Figures 4A and 4B, the shutters 81, 81 may be provided with operating means 86, 86 for manually rotating the sprocket wheels, and may be moved independently of each other. In this case, recording of a wide variety of image sizes can be carried out over appropriate areas of the recording material. Moreover, for images of the same size, the position at which the image is recorded can be changed in accordance with the portion of an object which is to be recorded or the like. Indicators 87, 87, ... for detecting and indicating the positions of the shutters 81, 81 should preferably be provided on the image recording table 14.

As mentioned above, an image of a desired size may be recorded at the image recording section 10. As long as image recording is being carried out, the recording belt 1 is kept stationary at a predetermined position so that the portion of the recording belt 1 on which image recording is being carried out faces the radiation source 11. When image recording is finished, the recording belt 1 is conveyed by the rollers 41, 42, 51 and 52, which are rotated in the directions indicated by the arrows, and the portion of the recording belt 1 on which an image has been recorded is conveyed to an image read-out section 20 disposed on the right side of the apparatus below the recording belt 1. Of the rollers 41, 42, 51 and 52, the roller 52 is a drive roller connected with a shaft 53a of a motor 53 by a belt or a chain 54, and the other rollers 41, 42 and 51 are driven rollers which are rotated by the rotation of the drive roller 52. As shown in Figure 2, a rotary encoder 55 is secured to the shaft 53a of the motor 53 for detecting the amount of rotation of the motor 53 and carrying out various control functions. The roller 41 of the first roller section 40 is a tension roller placed so that it puts tension on the recording belt 1. By providing the tension roller as one of the group of rollers around which the recording belt 1 is applied, the recording belt 1 can be conveyed accurately without becoming slack and with no unstable movement.

Further, one end of a shaft 42a of the roller 42 at the first roller section 40 is secured to a belt 45a which is applied around a pair of rollers 45b and 45c. The belt 45a is moved by rotation of a motor 45d connected to the roller 45b, such that one end of the roller 42 is moveable as shown in Figure 1 when the belt 45a is moved. By obliquely moving (deflecting) the roller 42 when necessary, the direction of conveyance of the recording belt 1 can be corrected when the recording belt 1 moves in a zigzag fashion. In cases where the directions of conveyance of the recording belt 1 on the upstream and downstream sides of the roller 42 make an angle of 90° with respect to each other as shown in Figure 1, the one end of the roller 42 should be moved so that the roller 42 is always positioned in a plane that makes an angle of 45° with respect to the directions of conveyance of the recording belt 1 on both the upstream and downstream sides of the roller 42. By thus moving one end of the roller 42, zigzag movement of the recording belt 1 can be eliminated without changing the length over which the recording belt 1 is conveyed.

The recording belt 1 is conveyed by the two roller sections 40 and 50 until the portion of the recording belt 1 on which the image has been stored is brought to the image read-out section 20, where the image is read out from said portion of the recording belt 1. Information about the image to be read out such as its size and the position at which the image was recorded is specified at the selection means 84 and transmitted to the image read-out section 20. The image read-out section 20 begins image read-out on the basis of the information, and the density of the picture elements and other conditions are adjusted in accordance with the image size. The image read-out section 20 will hereinbelow be described with reference to Figures 1 and 2, and Figure 5 which is a plan view showing an optical system region 20A (shown in Figure 2) accommodating an optical system for causing the stimulating rays to scan the recording material.

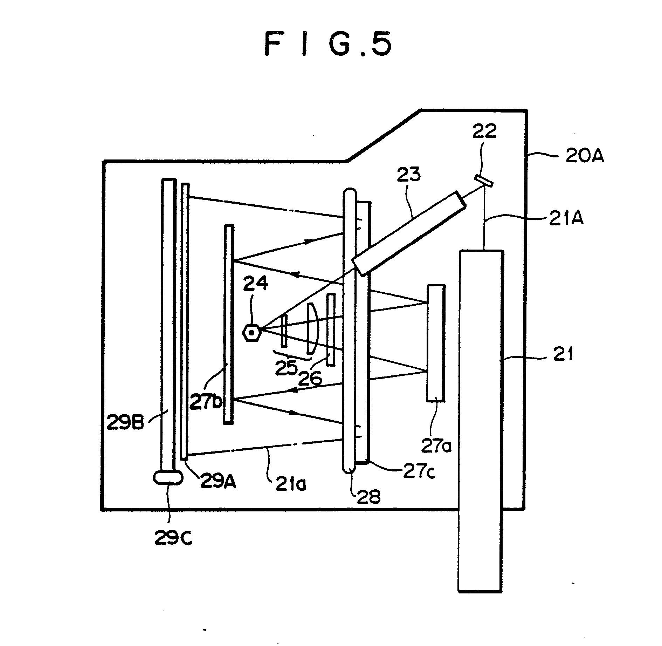

At the image read-out section 20, a stimulating ray source 21 constituted of an He-Ne laser or the like for producing stimulating rays 21A extends in a direction normal to the direction of conveyance of the recording belt 1. Also, a rotating polygon mirror 24, acting as a light deflector which causes the stimulating rays 21A to scan across the width of the recording belt 1, i.e. to scan in the main scanning direction normal to the sheet of Figure 1, is provided in the optical path of the stimulating rays 21A. As shown in Figure 5, the direction of the optical path of the stimulating rays 21A produced by the stimulating ray source 21 is changed by a mirror 22, and the stimulating rays 21A pass through a light input optical system 23 provided with a beam expander, a cylindrical lens or the like, and impinge upon the rotating polygon mirror 24. The stimulating rays 21A, reflected and deflected by the rotating polygon mirror 24, then pass through a scanning optical system 25, which is composed of an fθ lens or the like, and through a cylindrical lens 26. The direction of the optical path of the stimulating rays 21A is changed by a cylindrical mirror 27a and reflection mirrors 27b and 27c, and then the stimulating rays 21A repeatedly scan the width of the recording belt 1 on the lower circumferential surface of the roller 52. The cylindrical lens 26 and the cylindrical mirror 27a are optical elements which refract the stimulating rays 21A only in a plane parallel to the sheet of Figure 1. In the aforesaid optical system, these optical elements and the cylindrical lens in the aforesaid light input optical system 23 prevent pitch nonuniformity in the scanning lines from arising even if the axis, surface inclination, or the like of the rotating polygon mirror 24 deviates. Furthermore, a beam splitter 28 which transmits most of the incident stimulating rays 21A and reflects the remainder thereof is provided between the reflection mirror 27c and a scanning position on the recording belt 1. The stimulating rays 21A which pass through the beam splitter 28 are utilized as the stimulating rays for scanning the recording belt 1, while the stimulating rays 21A reflected by the beam splitter 28 impinge upon a grid 29A which extends in the direction in which the stimulating rays 21A are scanned and which is composed of alternate light and dark regions. The stimulating rays 21A which pass through the grid 29A are guided by a light guide rod 29B positioned at the rear of the grid 29A to a photodetector 29C where they are detected. In this manner, a synchronizing signal representing the scanning position of the stimulating rays 21A, is obtained. Simultaneously with the main scanning of the stimulating rays 21A, the recording belt 1 is conveyed at a predetermined speed in the sub-scanning direction, i.e. leftward in the image read-out section 20 in Figure 1. Accordingly, at the image recording section 10 the stimulating rays 21A are irradiated to nearly the overall surface of the portion of the recording belt which carries the radiation image stored thereon.

As the recording belt 1 is exposed to the stimulating rays 21A, the exposed part of the recording belt 1 emits light in proportion to the stored radiation energy, and the emitted light is detected by a photoelectric read-out means 70. In this embodiment, the photoelectric read-out means 70 comprises a long photomultiplier 71 extending in the main scanning direction at least over the length of the main scanning line and having a light receiving face facing the main scanning line as disclosed in EP-0209119, a filter 72 in close contact with the light receiving face of the photomultiplier 71 for selectively transmitting only the light emitted by the recording belt 1 and filtering out the stimulating rays 21A reflected by the surface of the recording belt 1 so that they do not reach the photomultiplier 71, and a light guide member 73 in close contact with the filter 72 for substantially guiding the light emitted by the recording belt 1 to the photomultiplier 71. The light emitted by the position being scanned by the stimulating rays 21A on the recording belt 1 impinges upon the photomultiplier 71 via the light guide member 73 and the filter 72 and is photoelectrically converted by the photomultiplier 71 into an electric image signal. The image signal is subjected to the necessary image processing, and fed to an image reproducing apparatus, for example, a display device such as a CRT or a recording apparatus for carrying out light beam scanning recording on a photosensitive film.

As for the radiation image read-out, there has heretofore been known a method wherein preliminary read-out for approximately ascertaining the radiation image stored on the recording belt 1 is carried out prior to the aforesaid image read-out (final read-out) for obtaining an electric image signal for use in reproduction of a visible image. From the preliminary read-out the conditions for the final read-out or the like are determined, and the final read-out is carried out on the basis of the information obtained in the preliminary read-out.

As disclosed in, for example, EP-0077677, the preliminary read-out may be conducted by scanning the recording belt 1 with stimulating rays having a lower energy level than the energy level of the stimulating rays used in the final read-out, and detecting the light emitted by the recording belt 1 in the course of being scanned by a photoelectric read-out means.

The image read-out section 20 may be constituted so as to carry out both the preliminary read-out and the final read-out. In this case, the preliminary read-out is carried out by conveying the portion of the recording belt 1, on which the image has been stored, leftward in the image read-out section 20. The respective rollers are then rotated in the reverse direction in order to return said portion of the recording belt 1 to the read-out start position. The final read-out is then carried out while said portion of the recording belt 1 is again conveyed leftward. During the preliminary read-out, the recording belt 1 is conveyed at a speed higher than in the final read-out.

The portion of the recording belt 1 on which the image read-out process has been finished is moved by the first roller section 40 and the second roller section 50 to an erasing section 30. The erasing section 30 comprises a case 31, and a plurality of (by way of example, eight) erasing light sources 32, 32, ... constituted of fluorescent lamps or the like and disposed in the case 31. The erasing light sources 32, 32, ... mainly produce erasing light having a wavelength within the stimulation wavelength range of the stimulable phosphor layer of the recording belt 1. The erasing light is irradiated over the region of the recording belt 1 on which the image was recorded while the recording belt 1 is being conveyed, thereby to release radiation energy remaining on the stimulable phosphor layer of the recording belt 1 after the image read-out process is finished. Reference numeral 33 denotes a filter for filtering out ultraviolet ray components in the erasing light. A lead plate 2 for blocking radiation is provided below the image recording table 14 so that radiation produced by the radiation source 11 at the time an image is recorded does not adversely affect the image read-out section 20, the erasing section 30, and the recording belt 1 positioned therein. Also, in this embodiment, image read-out and erasing are carried out on a single image forming region simultaneously for a predetermined period. Therefore, in order to eliminate a problem arising from erasing light's leaking from the erasing section 30 into the image read-out section 20 during image read-out, two pairs of nip rollers 61 and 62 are provided at both extremities of the erasing section 30 to grasp the recording belt 1 and prevent erasing light from leaking into the image read-out section 20 along the surface of the recording belt 1. Also, the nip rollers 61, 62 and the surface of the recording belt 1 on the side opposite the erasing light sources 32, 32, ... are covered by a light shielding plate 63, thereby shielding out the erasing light reliably. Moreover, in this embodiment, a roller 64 for deviating the conveyance path of the recording belt 1 upward is provided between the image read-out section 20 and the erasing section 30. The roller 64 also has the effect of shielding the image read-out section 20 from the erasing light. Erasing may be carried out only on the portion of the recording belt 1 that was exposed to radiation in the image recording section 10. Therefore, the erasing of a portion of the recording belt 1 on which a small-sized image was recorded can be completed within a comparative short time, and erasing can be achieved efficiently for each size of recorded image.

The recording belt portion on which the erasing has been finished in the erasing section 30 is conveyed to the image recording section 10 for reuse in image recording.

With this embodiment wherein portions of the recording belt 1 in the image recording section 10 which need not be exposed to radiation are covered by the radiation blocking shutters 81, 81 in accordance with the size of the image which is to be recorded, erasing may be carried out only on the portion of the recording belt on which the image was formed and can therefore be achieved efficiently. Also, with this embodiment wherein the shaft-to-shaft distance between the two roller sections 40 and 50, which distance defines the width of conveyance of the recording belt 1, is adjusted to be approximately equal to the length of the largest image, the image recording section 10 is disposed above the recording belt 1, and the image read-out section 20 and the erasing section 30 are disposed below the recording belt 1, the length of the overall apparatus in the horizontal direction can be decreased to a value approximately equal to the length of the above-mentioned largest image, and the recording and read-out apparatus can be made markedly small. Also, the scanning of the stimulating rays 21A in the main scanning direction is carried out on the circumferential surface of roller 52 which conveys the recording belt 1. Therefore, the movement of the recording belt 1 at the scanning position is very stable, and the scanning done in order to read out the image can be carried out accurately.

The stimulable phosphor layer need not necessarily be formed over the overall surface of the recording belt 1, and one or a plurality of the stimulable phosphor layers each extending over an area as large as the maximum-sized image may be formed on part of the recording belt 1. Also, in order to make the apparatus smaller, the predetermined distance between the edges of the two sets of roller sections should preferably not be more than 1.5 times as long as the length of the largest image recorded in the apparatus. The housing of the apparatus may be comparatively large. Alternatively, as shown in Figure 1, an image recording table may be projected horizontally from the upper surface of the housing to that the object is supported reliably. The configurations of the other parts of the apparatus are not limited to those described in the aforesaid embodiment.

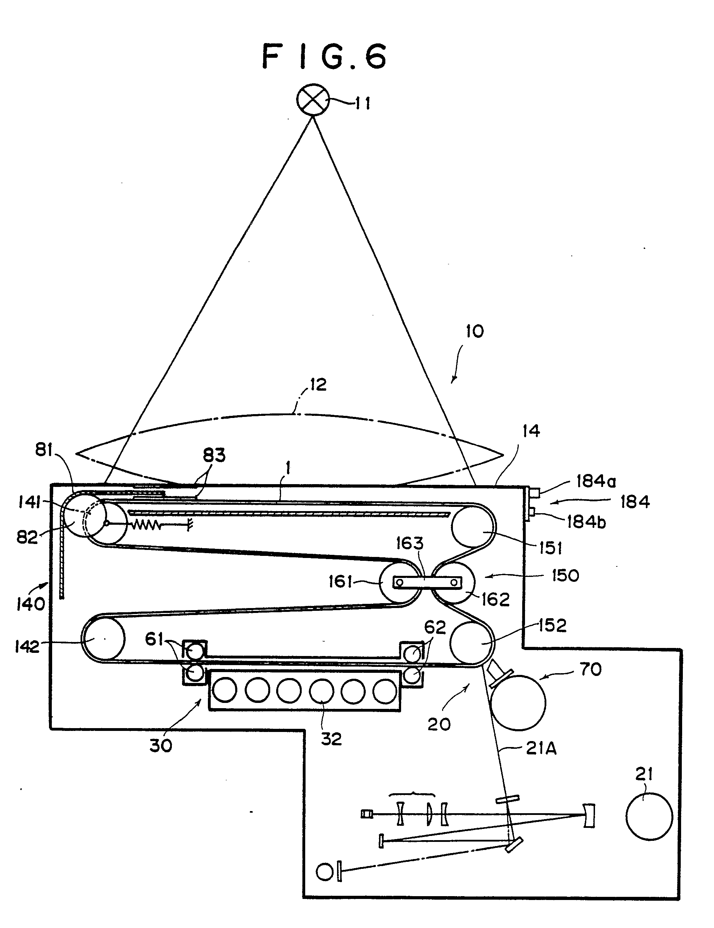

Another embodiment of the radiation image recording and read-out apparatus in accordance with the present invention will hereinbelow be described with reference to Figure 6 and those that follow. In Figure 6, similar elements are numbered with the same reference numerals with respect to Figure 1.

With reference to Figure 6, a group of rollers for conveying and circulating the recording belt 1 therearound comprises a first roller section 140 constituted of an upper roller (tension roller) 141 and a lower roller 142, and a second roller section 150 constituted of an upper roller 151 and a lower roller 152. The group of rollers also comprises two idle rollers 161 and 162, and two pairs of nip rollers 61 and 62 provided respectively on the downstream and upstream sides of the erasing section 30. The shaft-to-shaft distance between the first roller section 140 and the second roller section 150 is approximately equal to the length of the largest image recorded in the image recording section 10. Idle rollers 161 and 162 are provided between the upper rollers 141, 151 and the lower rollers 142, 152, and the recording belt 1 is applied around the idle rollers 161 and 162. The idle rollers 161 and 162 are connected together by a connection means 163, and may be moved horizontally in Figure 6 by a movement means (not shown). The image recording section 10 is provided with a radiation blocking shutter 81 which is moved by the sprocket wheel 82 along the guide plate 83. In this embodiment, the radiation blocking shutter 81 is provided only on one side of the image recording section 10. The shutter 81 is moved between an open position and a closed position in accordance with the size of the image, large or small, selected by a selection means 184 provided with pushbuttons 184a and 184b. (In Figure 6, the shutter 81 is located at its closed position.)

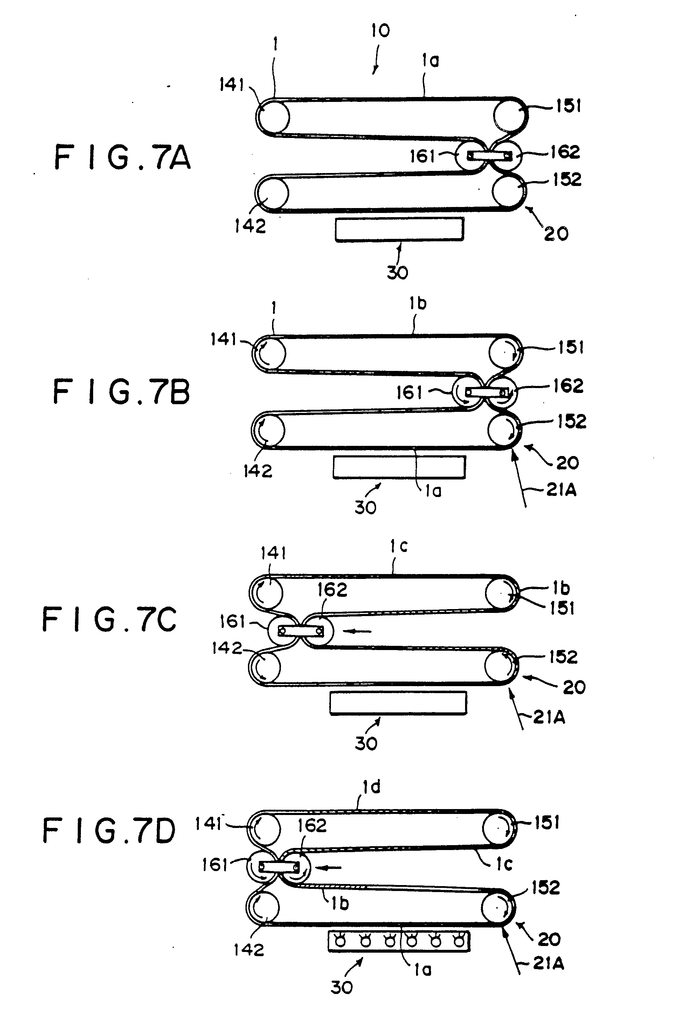

With this embodiment the idle rollers 161 and 162 are moved together horizontally so that the lengths of conveyance of the recording belt 1 on the upstream and downstream sides of the image recording section 10 are changed, and because of this configuration, a plurality of image recording steps can be carried out efficiently. Relationships between the movement of the idle rollers 161 and 162 and the operation of elements of the apparatus will hereinbelow be described with reference to Figures 7A through 7G.

With reference to Figure 7A, when the operation of the apparatus is begun, the idle rollers 161 and 162 are moved to the extreme right of their movement range, and the recording of a first image is carried out on the upper surface of the recording belt 1. Figures 7A through 7C show the recording of a small-sized image. Therefore, in the first image recording step, the hatched portion 1a in Figure 7A is exposed to radiation.

When the recording of the first image has been completed, the respective rollers are rotated to move portion 1a into the image read-out section 20 for carrying out the preliminary read-out. As shown in Figure 7B, at the time the preliminary read-out from portion 1a is completed, a portion 1b is located at the image recording position, and the recording of a second image is carried out on portion 1b. During the preliminary read-out, the erasing light sources in the erasing section 30 are kept off. Also, as mentioned above, the preliminary read-out is carried out while the recording belt 1 is being conveyed at a comparatively high speed. Therefore, the recording of the second image can be carried out within a comparatively short time interval after the recording of the first image is completed.

As shown in Figure 7C, when the recording of a second image is completed, the idle rollers 161 and 162 are moved leftward so that the recording belt 1 is moved and portion 1a of the recording belt 1 is returned to the position at which image read out starts. Also, a new portion 1c is located at the image recording position. Therefore, the recording of a third image is carried out on the portion 1c at the image recording section 10.

Thereafter, the respective rollers are rotated in the directions shown in Figure 7D, and the final read-out of portion 1a is carried out in the image read-out section 20. The upper rollers 141 and 151 are rotated slightly more quickly than the other rollers, while the idle rollers 161 and 162 are moved to the extreme left of their movement range. As a result, a new recording belt portion is efficiently fed to the image recording position. Therefore, when the final read-out of portion 1a has advanced up to the position shown in Figure 7D, a new portion 1d which is usable for image recording and which is adjacent to portion 1c is located at the image recording position by the movement of the idle rollers 161 and 162 which positioned portion 1a for final read-out. The recording of a fourth image is carried out on portion 1d.

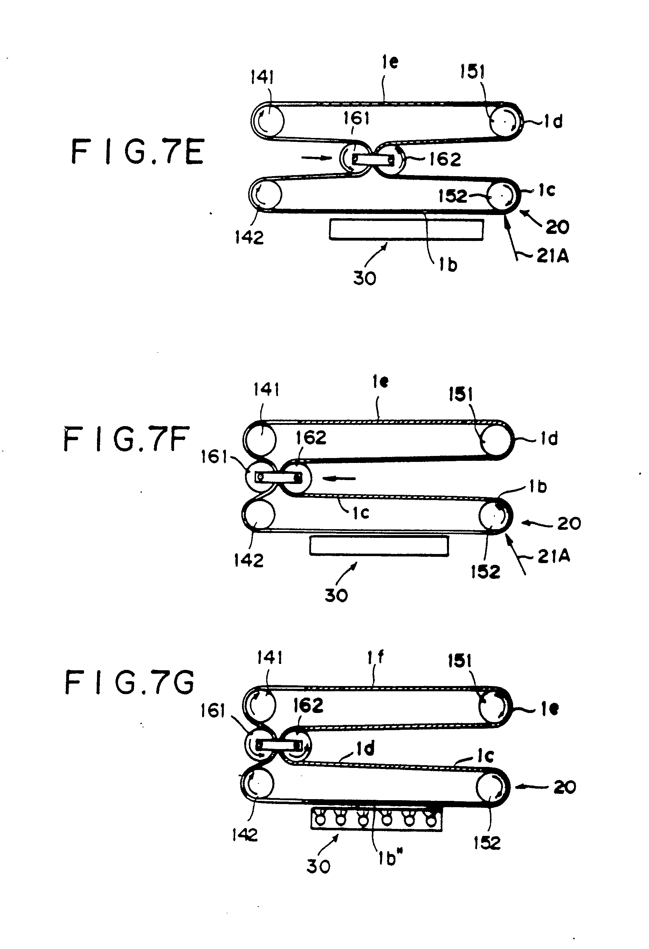

The recording of a fifth image becomes possible when the final read-out from portion 1a and the preliminary read-out from portion 1b are completed. Since a margin is present between portions 1a and 1b, the length the recording belt 1 must move in order for the final read-out from portion 1a and the preliminary read-out from portion 1b to be completed is longer than the length of a single image area. Therefore, as shown in Figure 7E, the idle rollers 161 and 162 are moved rightward prior to the completion of the preliminary read-out from portion 1b so that a portion 1e on which the recording of a fifth image is to be effected is adjacent the portion 1d. When the preliminary read-out from portion 1b is completed, the idle rollers 161 and 162 are moved to the extreme left of their movement range as shown in Figure 7F so that portion 1b is returned to the read-out start position. At this time, portion 1e is kept stationary at the image recording position. Therefore, the recording of the fifth image may be carried out at any time when the recording belt 1 is between the states shown in Figures 7E and 7F.

As shown in Figure 7G, the recording of a sixth image on a portion 1f adjacent the portion 1e can be carried out when the final read-out from portion 1b is completed. Portion 1f is kept stationary at the image recording position for the period of time between which the final read-out from portion 1b is completed and the preliminary read-out is carried out from portion 1c and portion 1c is returned to the read-out start position. Therefore, the recording of the sixth image on portion 1f may be effected at any instance during said time.

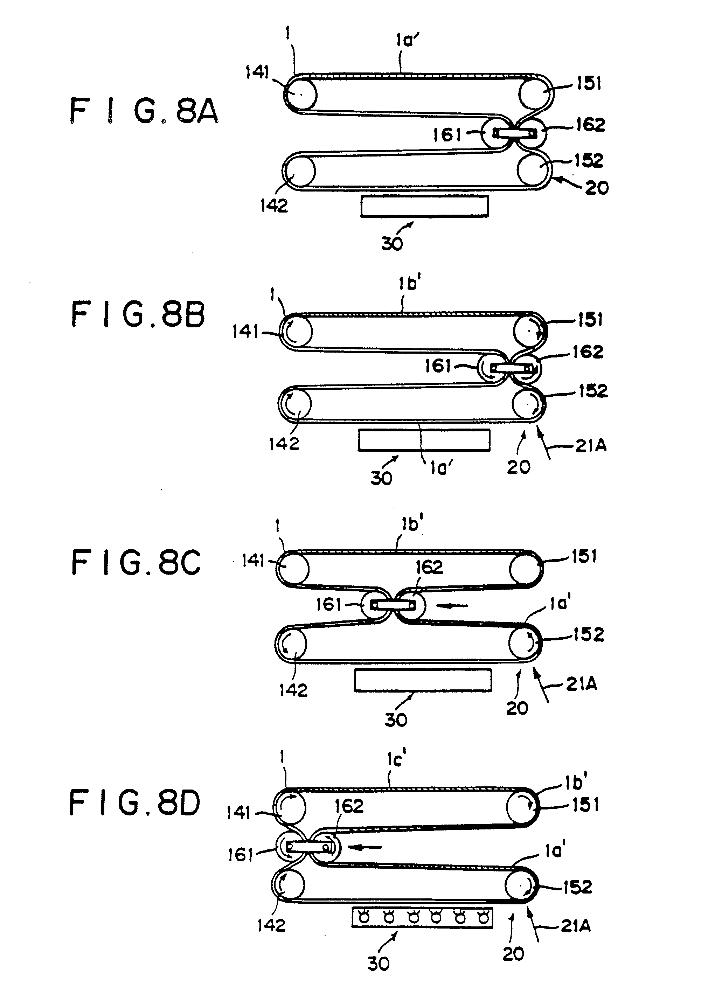

The relationship between the movement of the idle rollers 161 and 162 and the operations of elements of the apparatus for large-sized image recording will hereinbelow be described with reference to Figures 8A through 8H. When recording large-sized images, the shutter 81 is retracted to its open position.

With reference to Figure 8A, when the operation of the apparatus is begun, the idle rollers 161 and 162 are moved to the extreme right of their movement range, and a recording of a first image is carried out on portion 1a' of the upper surface of the recording belt 1. When the recording of the first image has been completed, the respective rollers are rotated without changing their positions. As shown in Figure 8B, the recording belt 1 is conveyed until the preliminary read-out from portion 1a' is completed. At this time, a portion 1b' is located at the image recording position, and the recording of a second image on portion 1b' becomes possible. Thereafter, as shown in Figure 8C, the idle rollers 161 and 162 are moved leftward so that portion 1a' is returned to the read-out start position. The recording of an image on portion 1b' may be carried out between when the preliminary read-out from the portion 1a' is completed and when portion 1a' on which the preliminary read-out has been completed is returned to the read-out start position. In this manner, the cycle time for recording constructive images can be minimized.

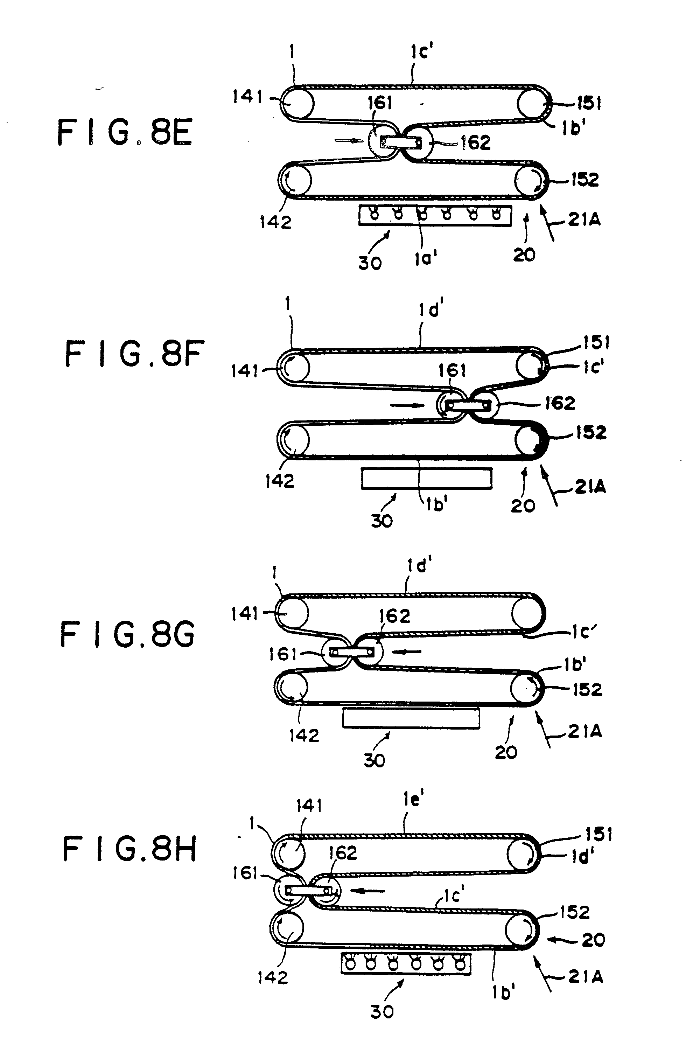

Thereafter, the respective rollers are rotated in the directions shown in Figure 8D so that the recording belt 1 is conveyed at a predetermined speed, and the final read-out from portion 1a' is carried out in the image read-out section 20. The upper rollers 141 and 151 are rotated more quickly than the other rollers, while the idle rollers 161 and 162 are moved to the extreme left of their movement range. As a result, a portion 1c' adjacent to portion 1b' is efficiently fed to the image recording position. At the time final read-out from portion 1a' has advanced to the position shown in Figure 8D, portion 1c' is located at the image recording position. Thereafter, as shown in Figure 8E, as the lower roller 152 is rotated, the idle rollers 161 and 162 are moved gradually rightward, and the final read-out from the portion 1a' is completed. Therefore, recording of a third image on portion 1c' should preferably be carried out between the states of the recording belt 1 shown in Figures 8D and 8E.

As shown in Figure 8F, recording of a fourth image on a portion 1d' adjacent to portion 1c' becomes possible when the preliminary read-out from portion 1b' is completed. At this time, the idle rollers 161 and 162 are moved slightly rightward in order to adjust the feed length of portions 1b' and 1d'. Also, as shown in Figure 8G, portion 1b, on which the preliminary read-out has been completed, is returned to the read-out start position by the leftward movement of the idle rollers 161 and 162. Therefore, the recording of an image portion 1d' should preferably be carried out between the states of the recording belt 1 shown in Figures 8F and 8G.

Thereafter, the final read-out from portion 1b' is carried out in the image read-out section 20. Also, the upper rollers 141 and 151 are rotated more quickly than the other rollers, and the idle rollers 161 and 162 are moved to the extreme left of their movement range, so that a portion 1e', adjacent to portion 1d', is quickly fed to the image recording position as shown in Figure 8H. As the final read-out from portion 1b' advances, the idle rollers 161 and 162 start moving rightward. The recording of a fifth image becomes possible with the recording belt 1 in this state.

With the embodiment shown in Figure 6 wherein idle rollers 161 and 162 are provided between upper rollers 141, 151 and lower rollers 142, 152, the lengths over which the recording belt 1 is conveyed on the upstream and downstream sides of the image recording section 10 can be changed so that image recording and image read-out are carried out simultaneously. Accordingly, a plurality of image recording steps can be carried out efficiently.

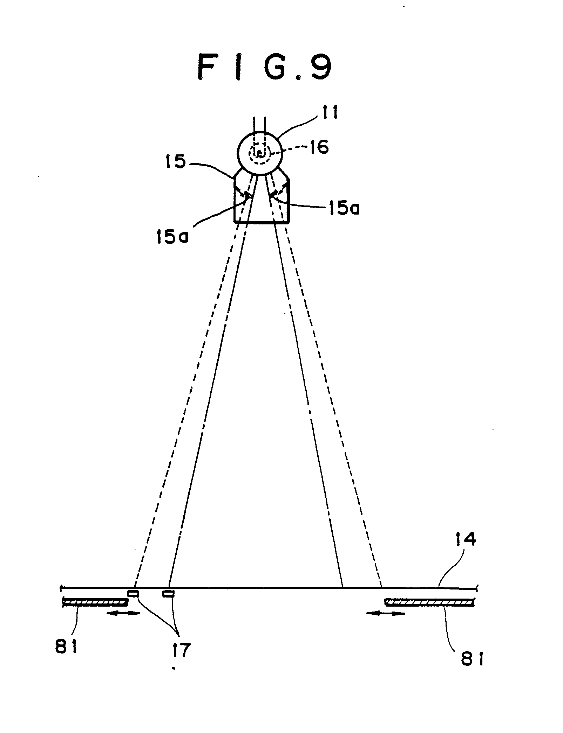

In the aforesaid embodiments, the radiation source 11 is not provided with an irradiation field stop, and radiation is irradiated toward the overall surface of the recording belt 1 in the image recording section 10. However, in the present invention, the radiation source 11 may be provided with an irradiation field stop, and the radiation blocking shutter 81 may be moved depending on how the irradiation field is adjusted by the irradiation field stop. Specifically, as shown in Figure 9, the radiation source 11 may be provided with an irradiation field stop 15 having shutter members 15a, 15a each of which is moved in the direction indicated by the arrow for adjusting the size of the opening through which the radiation is irradiated. In this case, after the irradiation field is adjusted a lamp 16 provided in the vicinity of the radiation source 11 is turned on prior to the irradiation in order to give an indication of the area over which the image will be recorded. The area over which the image will be recorded is illuminated on the surface of the image recording table 14 by visible light produced by the lamp 16. Therefore, optical sensors 17, 17 may be provided to detect the visible light, and the radiation blocking shutters 81, 81 may be moved to align with the irradiation field in accordance with the outputs of the optical sensors 17, 17. When the optical sensors cannot readily be provided directly in the vicinity of the image recording table 14, the visible light may be received by a light receiving edge of an optical fiber and transmitted to an optical sensor provided at an arbitrary location. If the radiation blocking shutter 81 is provided on a side of the image recording section when the radiation source 11 is provided with an irradiation field stop 15, then radiation scattered from the object will not impinge upon portions of the recording belt outside of the present image recording portion. Therefore, after image read-out, erasing must be carried out only on the portion of the recording belt on which the image was formed.

As the photoelectric read-out means, a means provided with the long photomultiplier as mentioned above should preferably be used to keep the apparatus small. However, it is also possible to use a known photoelectric read-out means comprising a light guide member having a light input end face extending along the main scanning line and a cylindrical light output end face, and a comparatively small photomultiplier in close contact with the light output end face of the light guide member.

## Claims

1. A radiation image recording and read-out apparatus comprising:

i) a recording belt composed of an endless belt provided with a stimulable phosphor layer,

ii) a group of rollers, around which rollers said recording belt is applied, including two roller sections spaced apart from each other by a predetermined distance, for conveying and circulating said recording belt along said predetermined distance between said two roller sections,

iii) an image recording section for exposing said stimulable phosphor layer to radiation which has passed through an object in order to store a radiation image of the object on said stimulable phosphor layer,

iv) an image read-out section provided with a stimulating ray source for emitting stimulating rays for scanning said stimulable phosphor layer carrying said radiation image stored thereon, and a photoelectric read-out means for obtaining an electric image signal by reading out light which is emitted by said stimulable phosphor layer in proportion to the stored radiation energy when said stimulable phosphor layer is scanned and stimulated with the stimulating rays, and

v) an erasing section for eliminating radiation energy remaining on said stimulable phosphor layer prior to recording an image on said stimulable phosphor layer after the previous radiation image is read out therefrom at said image read-out section,

wherein the improvement comprises:

a) said predetermined distance between said two roller sections is 1-1.5 times as long as the length of the maximun-sized radiation image which is recorded in said image recording section,

b) said image recording section faces said recording belt moving between said two roller sections, and one end of said recording section is provided with a radiation blocking shutter which can be moved between a closed position, at which said radiation blocking shutter covers part of said recording belt on the radiation exposure side, and an open position at which said radiation blocking shutter is retracted from above said recording belt in said image recording section, and

c) said image read-out section is positioned such that scanning by said stimulating rays is carried out on a portion of said stimulable phosphor layer present on the circumferential surface of a roller in said group of rollers.

2. An apparatus as defined in claim 1 wherein a roller constituting one of said roller sections is a tension roller urged so that it puts tension on said recording belt.

3. An apparatus as defined in claim 1 or 2, wherein said group of rollers includes two rollers connected together which can be moved to change the lengths of conveyance of portions of said recording belt on the upstream and downstream sides of said image recording section.

4. An apparatus as defined in any of the preceding claims wherein said photoelectric read-out means at said image read-out section comprises a long photomultiplier having a light receiving face extending along a scanning line of said stimulating rays, said long photomultiplier being disposed close to said recording belt.

5. An apparatus as defined in any of the preceding claims wherein said image read-out section is provided to carry out scanning by said stimulating rays on said stimulable phosphor layer present on the circumferential surface of a roller in one of said roller sections.

FIG.1

# F I G. 2

FIG.3A

85a 85b 85c 1 14 85d 85e 85f
81 81

85a 85b 85c 85d 85e 85f

FIG.3B

85a 85b 85c 1 14 85d 85e 85f
81 81

85a 85b 85c 85d 85e 85f

FIG.3C

85a 85b 85c 1 14 85d 85e 85f
81 81

85a 85c 85d 85e 85f
85b

FIG.4A

FIG.4B

# F I G.5

# F I G.6

FIG.7A

FIG.7B

FIG.7C

FIG.7D

FIG.7E

FIG.7F

FIG.7G

F I G. 8A

F I G. 8B

F I G. 8C

F I G. 8D

EP 0 333 977 A2

FIG.8E

FIG.8F

FIG.8G

FIG.8H

# F I G.9